(19) Europäisches Patentamt
European Patent Office
Office européen des brevets

(11) Publication number: **0 057 986**
**A2**

## (12) EUROPEAN PATENT APPLICATION

(21) Application number: 82300251.4

(22) Date of filing: 19.01.82

(51) Int. Cl.³: **H 01 M 6/14**
**H 01 M 4/90, H 01 M 4/66**

(30) Priority: 26.01.81 US 228392

(43) Date of publication of application:
18.08.82 Bulletin 82/33

(84) Designated Contracting States:
DE FR GB NL

(71) Applicant: HONEYWELL INC.
Honeywell Plaza
Minneapolis Minnesota 55408(US)

(72) Inventor: Doddapaneni, Narayan
700 Vance Drive
Glenside Pennsylvania 19038(US)

(74) Representative: Riddle, John et al,
Honeywell Control Systems Ltd. Patent Department
Charles Square
Bracknell, Berks.(GB)

(54) Electrochemical cell with improved cathode.

(57) An electrochemical cell contains a metal anode such as lithium, calcium, etc., a non-aqueous solvent depolarizer, such as thionyl chloride, sulfuryl chloride, sulfur dioxide, etc., an electrolyte salt, and a carbon based cathode having an insoluble and stable macrocyclic complex of polymeric cobalt phthalocyanine admixed therewith and heat treated at a temperature of at least 500°C. A preferred range of the complex is from 0.5% to 20%, preferably 2% to 10%, by weight of the carbon cathode.

EP 0 057 986 A2

- 1 -

## ELECTROCHEMICAL CELL WITH IMPROVED CATHODE

### Background of the Invention

Lithium non-aqueous solvent depolarizers, such as $SOCL_2$, $SO_2$, $SO_2CL_2$, have emerged as the best systems for use in primary batteries having combined characteristics of high rate capability, high energy density, high cell voltages, long shelf life and wide operating temperature range. The non-aqueous solvent serves both as an electrolyte solvent and as a cathode depolarizer.

The rate of electrochemical reduction of these solvents in such a system depends strongly upon the nature of the cathode substrate. For example, the reduction of thionyl chloride proceeds at low rates upon various metals and non-metals while moderate rates can be achieved on carbon blocks. The use of carbon black cathode substrates has, however, encountered the problem that the cell voltage tends to drop significantly when the cell operates at high discharge rates or at low temperature.

According to the invention, there is provided an electrochemical cell comprising a cathode, a lithium anode, a thionyl chloride depolarizer and an electrolyte salt; characterized by a carbon cathode having a polymeric cobalt phthalocyanine complex admixed therewith and having been heat treated at a temperature of at least $500^\circ C$.

According to the invention, there is also provided a method of making an electrochemical cell including a cathode, a lithium anode, a thionyl chloride depolarizer and an electrolyte salt, characterized in that the cathode is formed from carbon having a polymeric cobalt phthalocyanine complex admixed therewith, and in that the mixture is heat treated to a temperature of at least $500^\circ C$.

### Description of the Preferred Embodiment

A preferred cathode for use in an electrochemical cell having a lithium anode, a thionyl chloride depolarizer and an electrolytic salt, comprises a carbon cathode having an insoluble and stable macrocyclic complex of polmeric cobalt phthalocyanine admixed with the carbon and heat treated at a temperature of at least 500°C, to catalyse the mixture and render it catalytically active. The amount of complex ranges from o.5% to 20% by weight based on the weight of carbon, preferably 2% to 10%, and a preferred carbon material is compressed carbon or Shawinagan carbon black.

In a preferred method of manufacturing the cathode, the cathode is formed by mixing a quantity of the complex with a major porticn of carbon in the proportions given above, heating the mixture at a temperature of at least 500°C for at least two hours, cooling the mixture, forming a slurry by mixing a non-aqueous solvent with the mixture and shaping the slurry into a cathode of the desired shape. Preferably the carbon catalyst mix is heat treated at a temperature of at least 550°C, and a binder, such as Teflon (R.T.M.) may be included in the slurry.

One particularly useful thionyl chloride cell utilizes lithium tetrachloraluminate or aluminum trichloride as an electrolyte salt. A number of cells employing lithium, lithium tetrachloraluminate or aluminum of cells employing lithium, lithium tetrachloraluminate or aluminum trichloride and thionyl chloride were prepared, and experimented with, using different cathodes.

In the first set of experiments, $Li/SOCl_2$ cells with 1.5M $LIAICl_4$ $SICl_2$ electrolyte were subjected to constant currents. The potentiodynamic voltages of cells with and without the catalysed polymeric cobalt phthalocyanine complex $(CoPc)_n$ and at various applied currents, is shown in Table I. The complex was synthesized by heating a mixture of 3, 3', 4, 4' - benzophenone tetracarboxylic dianhydride, $CoCl_2$ and urea at 200°C for one hour. Voltage increases of 250, 350 and 440 MV at corresponding current loads of 100, 200 and 300 MA were achieved.

In the second set of experiments, cells were prepared and discharged at a rate of $4MA/cm^2$ at various temperatures.

As can be seen from the data presented in Table II, the average operating voltage of a cell with a catalyzed $(CoPc)_n$ cathode increased throughout the operating temperature range. Furthermore, the specific cathode capacity of catalyzed cathodes increased dramatically, particularly at low temperature discharge (0.6 ampere hour per gram vs. 1.15 ampere hour per gram at $-40^\circ F$).

To demonstrate the necessity of the catalyzing step on the cathode, time comparisons were made of two cells which were identical in preparation, except that one of the cells had a cathode containing no heat treated catalyst-carbon mix while the other cell had a cathode containing catalyst-carbon mix heat treated for two hours at $550^\circ C$. Both cells were then discharged at room temperature at a constant current of 4 $MA/cm^2$. The average operating voltage of cells containing catalyst-cathode not heat treated was 250mV less than that of the cell with heat treated catalyzed cathode.

TABLE I

Polarization Characteristics of $Li/SOCl_2$

Cells with 1.5m $Alcl_4$ at $72^\circ F$

| CURRENT, MA | VOLTAGE, V | |
| --- | --- | --- |
| | UNCATALYZED CATHODE | $(COPC)_n$ CATALYZED CATHODE |
| 0 | 3.63 | 3.36 |
| 20 | 3.30 | 3.46 |
| 40 | 3.24 | 3.44 |
| 60 | 3.20 | 3.42 |
| 100 | 3.15 | 3.40 |
| 150 | 3.05 | 3.35 |
| 200 | 2.97 | 3.32 |
| 250 | 2.90 | 3.29 |
| 300 | 2.81 | 3.25 |

- 4 -

### TABLE II
#### Average Li/SOCl$_2$ Cell Voltages at
#### Discharge Current Rate of 4MA/cm$^2$

| TEMPERATURE OF DISCHARGE, $^\circ$F | UNCATALYZED CATHODE | (COPC)$_n$ CATALYZED CATHODE |
|---|---|---|
| -40 | 2.78v | 3.02 |
| -20 | 2.86v | 3.10 |
| 72 | 3.25v | 3.49 |
| 145 | 3.36v | 3.55 |

In a third set of experiments, Li/SOCl$_2$ cells with an acid electrolyte like Alcl$_3$/SOCl$_2$ were polarized. The cell voltages at various current loads are given in Table III.

### TABLE III
#### Polarization Characteristics of Li/SOCl$_2$
#### Cells with 2.3m Alcl$_3$/SOCl$_2$ Electrolyte at Room Temperature

| CURRENT, MA | VOLTAGE, V | |
|---|---|---|
| | UNCATALYZED CATHODE | (COPC)$_n$ CATALYZED CATHODE |
| 0 | 3.92 | 3.91 |
| 20 | 3.74 | 3.80 |
| 50 | 3.65 | 3.73 |
| 100 | 3.52 | 3.64 |
| 150 | 3.44 | 3.58 |
| 200 | 3.16 | 3.50 |
| 300 | 3.08 | 3.27 |
| 400 | 3.01 | 3.21 |
| 500 | 2.93 | 3.14 |
| 600 | 2.81 | 3.08 |
| 700 | 2.53 | 2.96 |

CLAIMS

1.  An electrochemical cell comprising a cathode, a lithium anode, a thionyl chloride depolarizer and an electrolyte salt; characterized by a carbon cathode having a polymeric cobalt phthalocyanine complex admixed therewith and having been heat treated at a temperature of at least 500°C.

2.  The cell of Claim 1, characterized in that said amount of complex ranges from 0.5% to 20% by weight, based upon the weight of carbon.

3.  The cell of Claim 2, characterized in that said amount of complex ranges from 2% to 10% by weight, based upon the weight of carbon.

4.  The cell of Claim 1, characterized in that said cathode consists primarily of carbon.

5.  The cell of any one of the preceding claims, characterized in that said carbon comprises Shawinigan carbon black.

6.  A method of making an electrochemical cell including a cathode, a lithium anode, a thionyl chloride depolarizer and an electrolytic salt, characterized in that the cathode is formed from carbon having a polymeric cobalt phthalocyanine complex admixed therewith, and in that the mixture is heat treated to a temperature of at least 500°C.

7.  The method of Claim 6, characterized by the steps of heating said mixture at a temperature of at least 500°C for at least two hours, cooling said mixture, forming a slurry of said mixture and a non-aqueuous liquid, and shaping said slurry into a cathode of desired shape.

8.  The method of Claim 7, characterized in that said mixture slurry further includes a binder.

9.  The method of Claim 8, characterized in that said binder is a Teflon powder or emulsion.

10. The method of Claim 7, characterized in that the amount of said complex ranges from 0.5% to 20% by weight, preferably 2% to 10%, based upon the weight of the carbon.